(19) Europäisches Patentamt
European Patent Office
Office européen des brevets

(11) **EP 1 793 481 A2**

(12) **EUROPEAN PATENT APPLICATION**

(43) Date of publication:
**06.06.2007 Bulletin 2007/23**

(51) Int Cl.:
***H02K 23/40*** (2006.01)   *H02K 1/14* (2006.01)

(21) Application number: **06256183.2**

(22) Date of filing: **04.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.12.2005 CN 200510119150**

(71) Applicant: **Johnson Electric S.A.**
**2300 La Chaux-de-Fonds (CH)**

(72) Inventors:
• **Tang, Xian**
**Tai Po Industrial Estate**
**Tai Po (HK)**

• **Yuan, Weifeng**
**Tai Po Industrial Estate**
**Tai Po (HK)**
• **Zhao, Jian**
**Tai Po Industrial Estate**
**Tai Po (HK)**

(74) Representative: **Hocking, Adrian Niall**
**Marks & Clerk**
**27 Imperial Square**
**Cheltenham, GL50 1RQ (GB)**

(54) **Universal motor and lamination for stator thereof**

(57)    A lamination 10 for the stator of a universal motor has two poles 12 and a flux return path in the form of a ring 14 joining the two poles together. Each pole 12 has a pole face 16 defining there between a rotor space 20 for accommodating a rotor and each pole 12 has a neck portion 18 for receiving stator field windings. The width A of the ring 14, the length B of the pole 12, the radial distance C between the pole faces 16 and the width D of the neck portion 18 are selected according to formulae to achieve improved power output and output torque.

FIG. 1

**Description**

Technical Field

This invention relates to universal motors and in particular, to laminations for the stator core of a universal motor.

Background

There is a desire for appliances today to be smaller, lighter and/or more powerful. Such desires impose similar requirements on the motors which drive these appliances. One common type of motor used to power household appliances such as power tools, kitchen appliances and vacuum cleaners is the small universal motor. Typically such motors operate between 8000 to 18000 rpm with vacuum cleaner motors reaching speeds up to 38000 rpm. Today's appliances require the universal motor to be lighter and/or smaller with a higher ampere rating and better overload capacity.

For a series connected universal motor, the direct-axis flux is proportional to the current of the field/armature. The direct-axis flux is the air-gap flux distribution between the stator poles and the armature, created by the field windings. This flux is generally symmetrical about the center line of the field poles which is known as the field-axis or direct-axis. Hence, the motor current density will be very high if there is insufficient space for the stator winding. The balancing of weight and winding space can be achieved by optimizing the lamination design, giving a reasonable magnetic flux density distribution and adequate space (slot space) for the stator winding, within the restrained motor frame size.

Universal motors are rated according to the external size of the stator of the motor known as "frame size". To increase power of the motor of a given frame requires the external size of the motor to remain the same, otherwise there will be mounting problems. However, within the restrained or given frame size, the actual shape of the lamination can be modified to improve certain operating characteristics and/or change the weight of the motor. As the stator core is a significant contribution to the weight of the motor, changes in the stator core weight directly affects the weight of the motor. Of course, the weight of the stator windings is also a factor.

To obtain a desired speed and torque for a small universal motor, the dimensions along the field pole is critical. As the overall dimension of the stator, the frame size, is limited, the magnetic torque is determined by the effective magnetic flux which passes through the field pole, acting as an excited magnetic field. Therefore, the dimensions of the stator laminations must be designed to maximize effective magnetic flux while providing enough space for the field winding.

Magnetic flux distribution is important because it directly influences the limits of successful commutation. If the brushes are not in the neutral position or if the magnet wires connected to the segment of the commutator are not shifted a proper angle, then the armature magnetomotive force produces not only cross magnetization but also direct- axis magnetization, which results in uneven magnetic field lines. This will be much worse if the stator poles are saturated which will happen if the neck portion of the pole is too narrow. The field windings are located about the neck portion of the stator poles and are located in stator slots defined or limited by the stator ring and the pole. The size of the neck portion of the pole is a direct tradeoff on the size of the stator slots, the bigger the slot the greater the maximum number of turns of the field winding that can be accommodated. Also the smaller the neck portion the smaller the total length of field wire used to wind the same number of turns, reducing weight and cost.

Summary of the Invention

Accordingly, in one aspect thereof, the present invention provides a lamination for the stator of a universal motor, the lamination having two poles and a flux return path in the form of a ring joining the two poles and defining an outer diameter of the stator core, each pole having a pole face defining there between a rotor space having an inner diameter for accommodating a rotor, each pole having a neck portion connecting the pole to the ring, the ring and poles define a space for a stator winding to be disposed about the pole without interfering with the rotor space; wherein
the width of the ring at the pole interface is A,
the length of the pole from the pole face to the ring is B,
the length of the inner diameter is 2C, and
the width of the neck portion of the pole is D; and wherein

$B = K_1 * A$ where $K_1$ is in the range 0.65 to 1.0
$C = (K_2 * A) * (A + B)/B$ where $K_2$ is in the range 1.7 to 2.05
$D = K_3 * A * C/B$ where $K_3$ is in the range 0.72 to 0.747.

Preferably, the width of the ring is substantially uniform.
Preferably, the lamination has a hole in the neck portion of the pole and D is equal to the width of the neck portion less the width of the hole measured in the width direction of the neck portion.

Preferably, the lamination is stamped from a sheet of cold rolled steel or silicon steel.

According to a second aspect thereof, the present invention also provides a universal motor having a laminated stator core, wherein the stator core contains laminations as defined above.

Preferably, the field windings and the armature windings are electrically connected in series.

Brief Description of the Drawings

One preferred embodiment of the present invention will now be described , by way of example only, with reference to the accompanying drawings, in which:

Figure 1 is a plan view of a lamination of a stator core for a universal motor according to the present invention and illustrating various dimensions;

Figure 2 a plan view of a stator and rotor lamination set;

Figures 3a-d are field line graphs for the stator/rotor lamination set of the preferred embodiment and three prior art examples; and

Figures 4a-b are field line graphs for stator/rotor lamination sets illustrating the effect of changing one dimension of the stator lamination.

Detailed description of the preferred embodiment

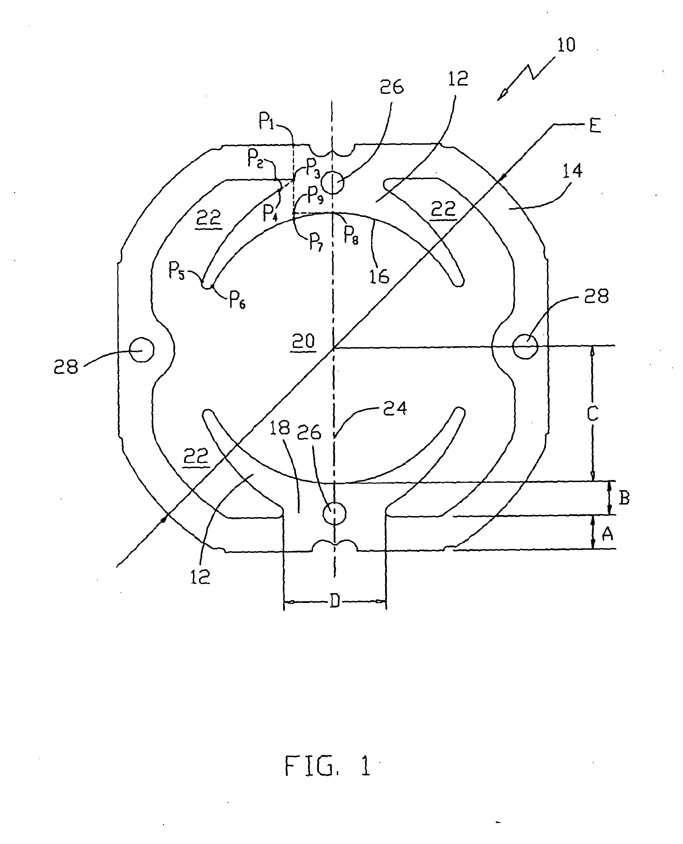

Figure 1 shows a lamination 10 for use in a laminated stator for a universal motor. The lamination 10 has two poles 12 connected together by a flux return path in the form of a ring 14 (also known as a yoke). Each pole has an arcuate pole face 16 and a narrowed or neck portion 18 which connects to the ring. The pole faces extend towards one another and define there between a rotor space 20 for accommodating a rotor or armature. In use a field winding would be located about the neck portion within the gap or slot 22 (known as the stator slot or field slot) formed between the ring and the pole. The poles face each other and extend along an imaginary line known as the pole axis 24.

A hole 26 optionally, may be formed in the lamination 10 in the neck portion 18 of each pole 12. The purpose of this hole is to reduce the weight of the lamination and to aid cooling of the pole. Provision of holes 26 depends on design choice and operating requirements.

Two other holes 28 are optionally provided in the ring diagonally opposite each other and equally spaced from the poles for mounting of the motor and/or bearing support brackets. The width of the ring is increase in the region of the holes to maintain the same area or volume of metal to maintain magnetic flux density.

Dimensions A to E of the lamination are indicated for further discussion, as are points P1 to P7.

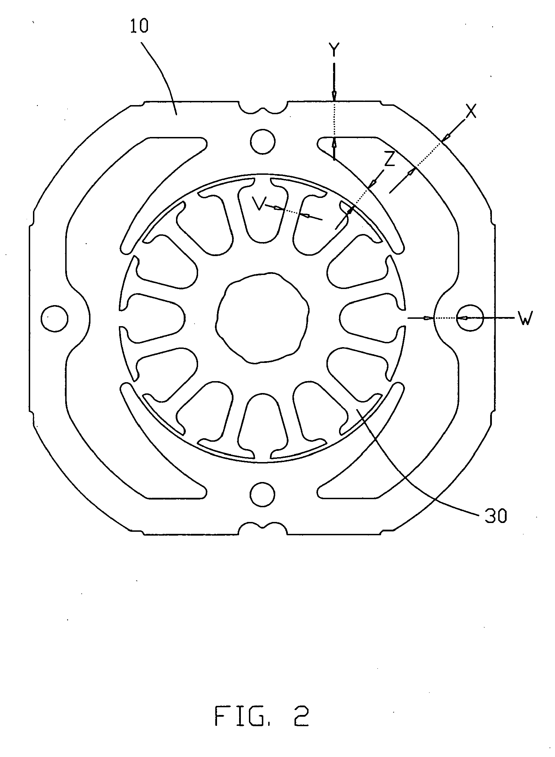

In Figure 2, the stator lamination 10 is shown with a corresponding armature lamination 30 in place. Certain areas or regions are represented by lines labeled V through Z representing measurement locations as discussed below.

The design of lamination 10 will now be discussed using magnetic theory and will refer to the parts and dimensions noted on Figure 1.

In this discussion, $\Phi_d$ is defined as the direct-axis flux per pole. Half of $\Phi_d$ passes through line 'P3P7' of Fig. 1 and then goes through arc 'P6P7'. Point 'P3' should be just above point 'P7'. In this case, the field lines will pass directly into the flux return path or ring of the stator (also known as the yoke). The ideal design is where there is enough slot area for the field windings but does not cause distortion of the flux density at the half poles. For the purpose of manufacture, the sharp point 'P3' is trimmed as arc 'P2P4', and 'P2P4' is very near to point 'P3'. To get the lowest flux density in the pole, the field lines should be nearly parallel to line 'P3P7' in the neck portion of the pole. The arc 'P3P5' is designed to let flux pass through line 'P3P7' nearly perpendicularly. But the line segment near point 'P7' can't reach that purpose due to the combination of bending by arc 'P7P8' and the squeezing by flux from arc 'P7P8'. So, the effect of segment 'P7P9' can be ignored if the motor size is not very big. Thus the effective length of line 'P3P7' for field lines to go through is "B". The magnetic flux through dimension "A" is $\dfrac{1}{2S_A}\Phi_d$ , and it's $\dfrac{1}{2S_B}\Phi_d$ along line 'P3P7', where $S_A$ and $S_B$ are the respective sectional areas of dimensions A and B. So, it can be said that A and B should have almost the same flux density.

The universal motor electromagnetic torque can be evaluated by:

$$T = \frac{C_a}{\pi} \Phi_d i_a$$

where $i_a$ is the current in external armature circuit. $C_a$ is the total turns of armature winding, which is determined by slot area. The slot area of the armature is limited by the width of the spokes of the armature core as the flux density of the spokes must be kept within acceptable levels. Thus the slot area is proportional to armature area, refer to Fig-1, that means that 'T' is proportional to $\pi C^2$. If the appropriate flux distribution has been considered, this then gives:

$$T = m_1 C^2 \Phi_d \dots\dots\dots\dots\dots\dots\dots\dots\dots\dots\dots\dots\dots(1)$$

where $m_1$ is a factor related to the armature slot shape.

Note that the stator usually has a high current density, which leads to the yoke being over saturated at some extent in general. This is acceptable where a lighter weight product is absolutely the first priority. In other words, $\Phi_d$ should be proportional to A. Refer to Fig-1, A is the width of field yoke. Thus:

$$T = m_2 C^2 A \dots\dots\dots\dots\dots\dots\dots\dots\dots\dots\dots\dots\dots(2)$$

where $m_2$ is a factor related to the effective flux density go through A. It's assumed that the size along field poles is limited by application itself. This means:

$$A + B + C = \text{Constant} \dots\dots\dots\dots\dots\dots\dots\dots\dots\dots(3)$$

From equations (1) and (2), it can be said that A is fixed so that a effective flux $\Phi_d$ can be achieved for a special application. While C may be increased in order to attain larger output when an effective flux could not be increased anymore. From equation (3) this is at the cost of decreasing B, but it could not be decreased without limitation because saturation of the magnetic flux density along field pole is not permitted.

That is why B is dependent on the stator slot shape, which is known as "field slot".

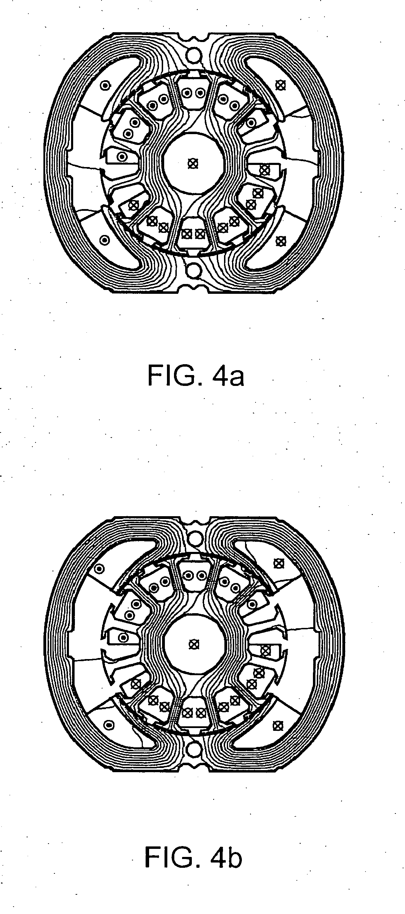

Referring to Figure 4, there is shown two lamination shapes. Fig. 4a has a dimension D=19.8mm, with a small B and a larger C. Fig. 4b has a dimension D=16.0mm, with B and C unchanged. In Fig. 4b, the flux densities in both the field pole and armature teeth are close to saturation. While in Fig. 4a, the flux density distribution is less dense due to the larger D. In other words, the dimension D shown in Fig 1 is important too because the area of "D" will provide enough space for field lines to go through in the condition that the field lines are not distorted or leaked from the lamination. In determining the proper value for dimension D, it should be noted that we are only concerned with the width of the lamination material, thus if, as is quite common, a hole is formed in the neck of the lamination then the value for D should be modified appropriately by subtracting the width of the hole measured in the direction across the neck from the measurement of the overall width of the neck.

Referring to above analysis, some formulas are found as follows with reference to Fig-1.

$$B = K_1 * A \dots\dots\dots\dots\dots\dots\dots\dots\dots\dots\dots\dots\dots\dots\dots(4)$$

where the factor $K_1$ is related to the shape of field slot, a deep slot has a smaller $K_1$ value compared to a shallow slot, when "C" is increased, $K_1$ will be decreased. $K_1$ is in the range of 0.65~1.0.

$$C = (K_2 * A) * (A + B) / B \dots\dots\dots\dots\dots\dots\dots\dots\dots\dots(5)$$

where $K_2$ is proportional to the armature size, $K_2$ is in the range of 1.7~2.05. Actually, dimension C is restricted by outer diameter E also, and it is not recommended to increase C above 0.30 times of E.

To make a balance between the winding space and effective flux on the basis of a restricted frame size, gives

$$D = K_3 * A * C / B \ \dots\dots\dots\dots\dots\dots\dots\dots\dots\dots\dots\dots\dots\dots\dots\dots\dots\dots\dots\dots\dots............(6)$$

where $K_3$ is dependent on the relationship of A/B, it is increased when the result of A/B is increased, $K_3$ is in the range of 0.72~0.747.

It's believed that if the motor dimensions and factors meet the restraints of equations (4), (5) and (6), the motor maximum output power and torque will be increased and the thermal management capability will be improved.

Experimental Analysis

Field simulation comparisons were made on four motor samples including the preferred embodiment labeled #1.

The motors' dimensions are summarized in Table 1.

**Table 1**

| Lamination Sample | #1 | #2 | #3 | #4 | Unit |
|---|---|---|---|---|---|
| Dimension: A | 4.5 | 4.45 | 6.31 | 4.5 | mm |
| Dimension: B | 4.5 | 4.81 | 2.19 | 3.7 | mm |
| Dimension: C | 18 | 18.04 | 18.04 | 16.8 | mm |
| Dimension: D | 13.42 | 12.5 | 25.57 | 15 | mm |
| Dimension: E | 62 | 61.925 | 61.82 | 62 | mm |
| Field Volume per piece | 535.77 | 488.31 | 590.64 | 514.33 | mm$^3$ |
| Armature Volume per piece | 220.50 | 229.88 | 235.06 | 219.02 | mm$^3$ |
| Area for winding per slot of field | 96.85 | 101.14 | 54.12 | 94.06 | mm$^3$ |
| Area for winding per slot of armature | 30.17 | 25.43 | 27.69 | 27.52 | mm$^3$ |
| Field and Armature Volume | 756.27 | 718.19 | 825.70 | 733.35 | mm$^3$ |
| Total area for winding | 749.44 | 709.72 | 548.76 | 706.48 | mm$^3$ |
| *K1* | 1.000 | 1.081 | 0.347 | 0.822 | - |
| *K2* | 2.000 | 2.106 | 0.737 | 1.685 | - |
| *K3* | 0.746 | 0.749 | 0.492 | 0.734 | - |

The laminations for both stator and armature are stamped from 0.5mm thick cold rolled steel sheet.

Test performance data is summarized in Table 3.

Table 3

| **Lamination series** | #1 | #2 | #3 | #4 | |
|---|---|---|---|---|---|
| AT MAXIMUM EFFICIENCY | | | | | Unit |
| Torque | 262.5 | 256.96 | 257.03 | 253.1 | mNm |
| Speed | 16539 | 16242 | 15710 | 15590 | Rpm |
| Current | 4.323 | 4.15 | 3.67 | 4.225 | Amp |
| Power Output | 460.34 | 440.9 | 426.84 | 415.41 | Watt |
| Efficiency | 49.22 | 49.24 | 53.4 | 46.42 | % |

(continued)

| Lamination series | #1 | #2 | #3 | #4 | |
|---|---|---|---|---|---|
| AT MAXIMUM EFFICIENCY | | | | | Unit |
| PF | 0.939 | 0.931 | 0.941 | 0.909 | |
| AT MAXIMUM OUTPUT POWER | | | | | Unit |
| Torque | 406.13 | 405.21 | 420.15 | 411.91 | mNm |
| Speed | 12680 | 12070 | 11487 | 11321 | Rpm |
| Current | 5.589 | 5.48 | 4.978 | 5.684 | Amp |
| Power Output | 526.62 | 507.87 | 502.05 | 486.69 | Watt |
| Note: <br><br> - All motors made with same configuration except stator lamination shape <br><br> - Test Voltage: 230V <br><br> - Test Frequency: 50Hz <br><br> - Commutation angle: 15Deg. <br><br> - Stack length is 30mm. | | | | | |

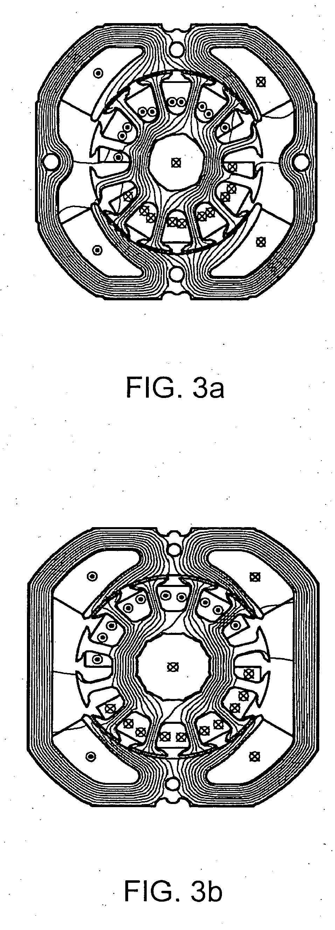

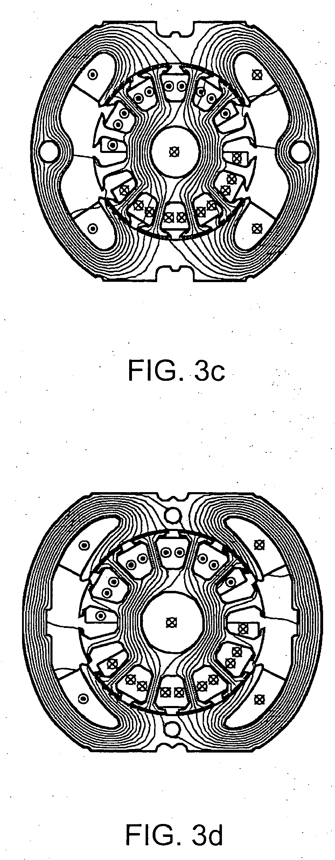

A finite element analysis using simulation software was carried out to determine the flux density at various locations. The results are shown in Figure 3 and are tabulated in Table 2 while Figure 2 shows the locations analyzed.

**Table 2**

| Motor | AVE. FLUX POS. V | MAX. FLUX POS. V | AVE. FLUX POS. W | AVE. FLUX POS. X | AVE. FLUX POS. Y | AVE. FLUX POS. Z | MAX. FLUX POS. Z |
|---|---|---|---|---|---|---|---|
| #1 | 1.975 | 2.07 | 1.785 | 1.880 | 1.785 | 1.975 | 2.07 |
| #2 | 2.07 | 2.16 | 1.80 | 1.710 | 2.07 | 2.07 | 2.16 |
| #3 | 2.07 | 2.16 | 1.755 | 1.89 | 1.077 | 1.98 | 2.16 |
| #4 | 1.98 | 2.29 | 1.98 | 1.98 | 2.048 | 1.98 | 2.29 |

Simulation Conditions: simulation was carried out using the software FEMAG with rotor winding 12x2T, stator winding 84T, current 8A, material - 0.5mm cold rolled steel (CRS) and commutation angle of 15 degrees.
Flux density at locations V and Z for examples #2, #3 and #4 were over saturated resulting in high iron losses in these motors. This means high heat generation and thus, problems for motor thermal management.
Figure 4 shows the effect on the flux density by modifying the dimension D as discussed before.
Thus, it can be seen that the objective of the invention has been satisfied by the dimensions determined by the method presented above. The motor is better able to provide large torque and output power if the dimensions and factors fall within the ranges specified in equations (4), (5) and (6).
The embodiment described above is given by way of example only and various modifications will be apparent to persons skilled in the art without departing from the scope of the invention as defined in the appended claims. For example, although the test samples used laminations stamped from cold rolled steel sheet, the invention may be applied to laminations stamped from sheet silicon steel.

**Claims**

1.  A lamination for the stator of a universal motor, the lamination (10) having two poles (12) and a flux return path in the form of a ring (14) joining the two poles (12) and defining an outer diameter (E) of the stator core, each pole (12) having a pole face (16) defining there between a rotor space (20) having an inner diameter for accommodating a rotor, each pole (12) having a neck portion (18) connecting the pole to the ring (14), the ring (14) and poles (12) define a space (22) for a stator winding to be disposed about the pole (12) without interfering with the rotor space (20); wherein
    the width of the ring (14) at the pole interface is A,
    the length of the pole (12) from the pole face to the ring is B,
    the length of the inner diameter is 2C, and
    the width of the neck portion (18) of the pole is D; and
    wherein

    $B = K_1 * A$          where $K_1$ is in the range 0.65 to 1.0

    $C = (K_2 * A) * (A + B)/B$    where $K_2$ is in the range 1.7 to 2.05

    $D = K_3 * A * C/B$       where $K_3$ is in the range 0.72 to 0.747.

2.  A lamination as defined in Claim 1, wherein the width of the ring (14) is substantially uniform.

3.  A lamination as defined in Claim 1 or 2, wherein the lamination (12) has a hole (26) in the neck portion (18) of the pole and D is equal to the width of the neck portion (18) less the width of the hole (26) measured in the width direction of the neck portion.

4.  A lamination as defined in Claim 1, 2 or 3, wherein the lamination (10) is stamped from a sheet of cold rolled steel.

5.  A lamination as defined in Claim 1, 2 or 3, wherein the lamination (10) is stamped from a sheet of silicon steel.

6.  A lamination as defined in any one of the preceding claims, wherein the lamination (10) has an outside diameter E and C is not greater than 0.30 * E.

7.  A universal motor having a laminated stator core, wherein the stator core contains laminations (10) as defined in any one of the preceding claims.

8.  A universal motor as defined in Claim 7, wherein electrically, the field windings and the armature windings are connected in series.

FIG. 1

FIG. 2

FIG. 3a

FIG. 3b

FIG. 3c

FIG. 3d

FIG. 4a

FIG. 4b